# EUROPÄISCHE PATENTSCHRIFT

(11) **EP 0 770 650 B1**
(45) Veröffentlichungstag und Bekanntmachung des Hinweises auf die Patenterteilung: **21.05.2003**
(21) Anmeldenummer: 96810696.3
(22) Anmeldetag: 16.10.1996
(51) Int. Cl.: C09D 133/06, C09D 5/03

(54) **Pulverlack**
Powder coating
Peinture sous forme de poudre

(30) Priorität: 25.10.1995 CH 301395
(43) Veröffentlichungstag der Anmeldung: 02.05.1997
(73) Patentinhaber: Vantico AG, 4057 Basel (CH)
(72) Erfinder: Gottis, Philippe-Guilhaume, 68200 Mulhouse (FR)
(74) Vertreter: Dannappel, Hans-Jochen, Dr.

(56) Entgegenhaltungen:
- GB-A- 1 333 361
- US-A- 3 859 314

## Beschreibung

Die vorliegende Erfindung betrifft Pulverlackzusammensetzungen auf Basis von festen Poly(meth)acrylharzen, d. h. von Harzen, die durch Polymersation von Monomeren, enthaltend Acryl- und/oder Methacrylmonomere erhältlich sind, mit freien Carboxylgruppen sowie deren Anwendung als Automobildecklack.

Pulverlackzusammensetzungen auf Basis von Poly(meth)acrylharzen kommen immer dann zur Anwendung, wenn Pulverlackbeschichtungen mit so hoher Wetterbeständigkeit und Härte erwünscht sind, dass dies mit anderen für Pulverlacke üblichen Bindemittelsystemen, wie Polyestem, nicht mehr erreichbar ist. So werden beispielsweise bestimmte feste Carboxylgruppen aufweisende Poly(meth)acrylharze kommerziell als Bindemittel für Pulverlacke vertrieben, die speziell für die Härtung mit Triglycidylisocyanurat gedacht sind und Pulverlacke mit den genannten Eigenschaften ergeben (Johnson Wax Speciality Chemicals Product Application Bulletin, Powder Coatings). Diese Pulverlacke können jedoch nur bei Temperaturen oberhalb von 160°C verwandt werden, weil sie bei Anwendung niedrigerer Temperaturen nur einen sehr schlechten Verlauf zeigen, was sich in einem ausgeprägten Orangenschaleneffekt äussert. Sie eignen sich deshalb trotz guter Wetterbeständigkeit beispielsweise nicht für die Herstellung von Automobildecklacken, da hierfür die Forderung besteht, dass der Lack bei einer Temperatur von maximal 140 - 150°C aushärtet, um Basislackbeschichtungen, auf die der Decklack aufgetragen wird, während der Härtung des Decklacks nicht in Mitleidenschaft zu ziehen.

Die vorliegende Erfindung bietet eine Lösung für das oben geschilderte Problem, indem sie spezielle Pulverlacke auf Basis von Poly(meth)acrylharzen zur Verfügung stellt, die bereits bei einer Temperatur von 140 - 150°C schnell und vollständig aushärten, die gute Verlaufseigenschaften auch bei diesen relativ niedrigen Temperaturen haben sowie eine gute Wetterbeständigkeit zeigen. Erreicht wird dies durch Verwendung von Epoxidharzen eines Molekulargewichtes unter 1500 als Härter von Pulverlacken auf Basis von Poly(meth)acrylharzen mit freien Carboxylgruppen, wobei die Epoxidharze mindestens 70 Gewichtsprozent (Gew.-%) Polyglycidylester cycloaliphatischer Polycarbonsäuren enthalten.

Gegenstand der Erfindung ist daher eine Pulverlackzusammensetzung, die als Bindemittel ein oder mehrere Poly(meth)acrylharze mit freien Carboxylgruppen und als Härter für diese Poly(meth)acrylharze ein oder mehrere Epoxidharze mit einem Molekulargewicht bis zu 1500 enthält und die weiterhin dadurch gekennzeichnet ist, dass die Epoxidharze mindestens 70 Gew.-% Polyglycidylester cycloaliphatischer Polycarbonsäuren umfassen.

Neben den ausgezeichneten Verlaufseigenschaften zeigen die Pulverlackzusammensetzungen gemäss der Erfindung auch eine gute Lagerfähigkeit bei Raumtemperatur oder mässig erhöhten Temperaturen, also beispielsweise im Temperaturbereich von 10 bis 40°C, und zeichnen sich daher auch durch ein gutes Reaktivitäts-/Stabilitätsverhältnis aus.

Poly(meth)acrylharze mit freien Carboxylgruppen lassen sich durch Copolymerisation von Acryl- und/oder Methacrylmonomeren, also beispielsweise von C₁-C₁₂-Alkyl(meth)acrylaten, wie Methyl-, Ethyl-, Propyl-, Butyl-, Pentyl-, Hexyl-, Octyl-, 2-Ethylhexyl-, Decyl-, Dodecyl(meth)acrylaten, wobei C₁-C₄-Alkyl(meth)acrylate bevorzugt sind, oder (Meth)acrylamid mit Acrylsäure und/oder Methacrylsäure und gegebenenfalls zusätzlichen anderen ethylenisch ungesättigten Comonomeren, wie Vinylaromaten, z. B. Styrol, α-Methylstyrol, Vinyltoluol oder auch β-halogenierten Styrolen, erhalten. Die Copolymerisation kann hierbei in bekannter Weise erfolgen. So kann man z. B. die Monomeren in geeigneten organischen Lösungsmitteln lösen und in Gegenwart eines geeigneten, in dem Lösungsmittel löslichen Initiators, wie Dicumylperoxid, und eines geeigneten Kettenübertragungsreagenzes, wie Thioglycolsäure, thermisch umsetzen (Lösungspolymerisation) oder das Monomerengemisch zusammen mit einer Lösung des Initiators in einem organischen Lösungsmittel in Wasser suspendieren und polymerisieren oder das Monomerengemisch auch mit Hilfe von Tensiden, z. B. Natriumlaurylsulfat in Wasser emulgieren und in Gegenwart eines wasserlöslichen Polymerisationsinitiators, wie K₂S₂O₈, umsetzen (Emulsionspolymerisation). Danach wird jeweils das fertige Poly(meth)acrylharz aus dem Lösungsmittel oder Wasser in fester Form isoliert. Die Umsetzung kann auch ohne die Verwendung von Lösungsmitteln oder Wasser erfolgen, z. B. gemäss der JP-A-Sho 53-140395. Geeignete Poly(meth)acrylharze sind bei Temperaturen im Bereich von Raumtemperatur (15 bis 25°C) fest. Sie weisen im allgemeinen ein Molekulargewicht zwischen 1000 und 50000 (Gewichtsmittel M_{w}), bevorzugt zwischen 5000 und 20000 auf. Der Tg-Wert (Glasübergangstemperatur) der Poly(meth)acrylharze, bestimmt mit DSC (Aufheizgeschwindigkeit: 10°C/Minute), beträgt bevorzugt 40 bis 75°C. Die Säurezahl der Harze, angegeben in mg äqiuvalente KOH pro g Poly(meth)acrylharz, beträgt bevorzugt 30 bis 160, bevorzugt 35 bis 80.

Als Polyglycidylester cycloaliphatischer Polycarbonsäuren werden in dieser Beschreibung allgemein Polyglycidylester von Polycarbonsäuren auf Basis eines Kohlenstoffgerüstes verstanden, das einen oder mehrere cycloaliphatische Ringe enthält und frei von C-C-Mehrfachbindungen oder von aromatischen Gruppen ist. Die einzelnen cycloaliphatischen Ringe können einen oder mehrere Substituenten, z. B. C₁-C₆-Alkyl-, Chlor-, Brom- oder Hydroxylsubstituenten aufweisen und haben bevorzugt 5 bis 10 Kohlenstoffatome. Enthält die Polycarbonsäure zwei oder mehrere cycloaliphatische Ringe, so können diese annelliert oder über geeignete Atomgruppen verknüpft sein, insbesondere über geradkettige oder verzweigte 2 bis 6-wertige aliphatische Gruppen von beispielsweise 1 bis 30 Kohlenstoffatomen, die auch eines oder mehrere Heteroatome, wie z. B. Schwefel-, Stickstoffoder insbesonders Sauerstoffatome enthalten sowie Substituenten, beispielsweise Chlor-, Brom- oder Hydroxylsubstituenten, aufweisen können. Beispiele für solche Brückengruppen sind die Gruppen der Formel -CH₂-, -C(CH₃)₂-, >CH-, >C(CH₃)-, >C< oder 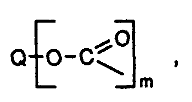 worin Q einen 2 bis 6-wertigen organischen Rest mit bevorzugt 2 bis 15 Kohlenstoffatomen bedeutet, der frei von C-C-Doppelbindungen ist. Spezielle Beispiele für erfindungsgemäss geeignete Polyglycidylester cycloaliphatischer Polycarbonsäuren sind die Diglycidylester von Hexahydrophthalsäure, Hexahydroisophthalsäure, Hexahydroterephthalsäure, Methylhexahydrophthalsäure, 2,5-Dimethylhexahydrophthalsäure, Endomethylenhexahydrophthalsäure, die Diglycidylester der 1,8-, der 2,3- sowie der 2,6-Decalindicarbonsäuren, Cyclohexantricarbonsäuretriglycidylester, wie Hexahydrohemimellitsäuretriglycidylester oder insbesondere Hexahydrotrimesinsäuretriglycidylester sowie Hexahydrotrimellitsäuretriglycidylester, die Tetraglycidylester von Hexahydromellophansäure (Cyclohexan-1,2,3,4-tetracarbonsäure) oder von Hexahydropyrromellitsäure (Cyclohexan-1,2,4,5-tetracarbonsäure). Polyglycidylester von Cyclohexanpolycarbonsäuren, wie 1,2,4-oder 1,3,5-Cyclohexantricarbonsäuretriglycidylester, können z. B. in üblicher Weise aus den entsprechenden Cyclohexanpolycarbonsäuren durch Umsetzung mit Epichlorhydrin erhalten werden. Die Cyclohexanpolycarbonsäuren können, soweit sie nicht kommerziell verfügbar sind, z. B. durch Hydrierung der entsprechenden Benzolpolycarbonsäuren gemäss der US-A-3,444,237 hergestellt werden.

Für die erfindungsgemässen Pulverlacke sind ebenfalls die cycloaliphatischen Polyglycidylester gut geeignet, die in der DE-A-23 19 815 und EP-A-0 506 617 beschrieben sind. Diese weisen die nachstehende Formel (III) auf, worin n eine ganze Zahl von 2 bis 9, bevorzugt von 2 bis 3, und X₁, X₂, X₃ und X₄ unabhängig voneinander ein Wasserstoffatom, eine C₁-C₄-Alkylgruppe oder eine Gruppe der nach stehen den Formel (II) bedeuten:

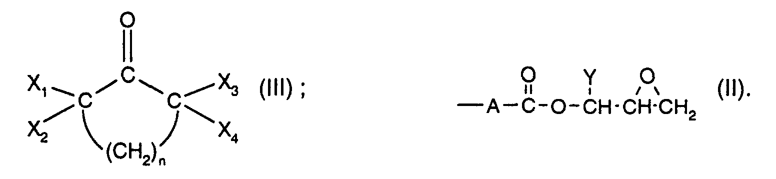

In der Formel (II) bedeuten A eine Alkylengruppe mit 2 bis 4 Kohlenstoffatomen, bevorzugt eine Ethylenegruppe, und Y ein Wasserstoffatom oder eine Methylgruppe.

Beispiele für Verbindungen dieses Typs sind Cyclopentanon-2,2,5,5-tetra(propionsäureglycidylester), Cyclohexanon-2,2,6,6-tetra(propionsäureglycidylester) oder Cyclooctanon-2,2-di(propionsäureglycidylester).

Weitere für die vorliegende Erfindung geeignete cycloaliphatische Polyglycidylester sind die ebenfalls in der EP-A-0 506 607 beschriebenen Glycidylester der untenstehenden Formel (IV), worin X₇ einen m-wertigen aliphatischen oder cycloaliphatischen mit 2 bis 30 Kohlenstoffatomen, dessen Kohlenstoffkette gegebenenfalls durch eines oder mehrere Heteroatome, wie Stickstoff- oder Schwefel-, insbesondere aber Sauerstoffatome unterbrochen sein kann und der gegebenenfalls auch substituiert sein, insbesondere Hydroxyl-, Chlor- oder Bromsubstituenten aufweisen kann, m eine ganze Zahl von 2 bis 6 und die Reste X₈ sowie X₉ unabhängig voneinander ein Wasserstoff-, Chlor- oder Bromatom, eine C₁-C₄-Alkylgruppe bedeuten oder aber einer der Reste X₈ oder X₉ eine Gruppe der nachsteheneden Formel (V) bedeutet und der andere eine der zuvor angegebenen Bedeutungen hat:

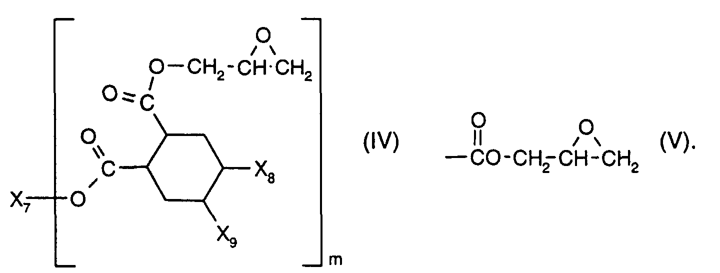

X₇ stellt bevorzugt einen zwei- bis vierwertigen Rest dar, der sich von einem aliphatischen Polyalkohol mit 2 bis 10 Kohlenstoffatomen, der gegebenenfalls oligomerisiert sein kann, wie z. B. von Glycol, Glycerin, Trimethylolpropan oder Bis-(trimethylolpropan), oder von Polyetherpolyolen durch Entfernung von zwei bis vier Hydroxylgruppen ableitet oder aber eine zwei- bis vierwertige, bevorzugt zweiwertige Gruppe mit der folgenden Molekülstruktur 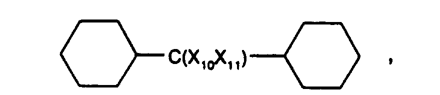 wobei X₁₀ und X₁₁ unabhängig voneinander ein Wasserstoffatom, eine C₁-C₄-Alkyl- oder eine Cyclohexylgruppe darstellen. Besonders bevorzugt stellen X₁₀ und X₁₁ entweder ein Wasserstoffatom oder eine Methylgruppe dar. Speziell bevorzugte Verbindungen dieser Struktur haben die Formeln (G-CH₂)₃C-C₂H₅, (G-CH₂)₂C(C₂H₅)-CH₂-O-CH₂-(C₂H₅)C(CH₂-G)₂, (G-CH₂)₂CH(OH) sowie G-(C₆H₄)-C(CH₃)₂-(C₆H₄)-G, worin G jeweils einer Gruppe der Formel (VI) entspricht und X₈ entweder ein Wasserstoffatom oder eine Gruppe der oben schon angeführten Formel (V) bedeutet:

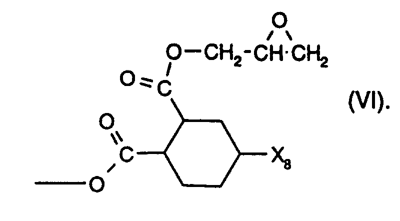

Bevorzugt sind Pulverlacke , die Hexahydroterephthalsäurediglycidylester, 1,2,4-Cyclohexantricarbonsäuretriglycidlyester (Hexahydrotrimellitsäuretriglycidlyester), 1,3,5-Cyclohexantricarbonsäuretriglycidlyester (Hexahydrotrimesinsäuretriglycidlyester) oder Polyglycidylverbindungen der oben schon angeführten Formeln (III) oder (IV) enthalten.

Selbstverständlich können die erfindungsgemässen Pulverlacke auch Gemische mehrerer Polyglycidylester von cycloaliphatischen Polycarbonsäuren enthalten. Daneben können die erfindungsgemässen Pulverlackzusammensetzungen aber auch andere feste und/oder flüssige Epoxidverbindungen enthalten, wenn deren Menge 30 Gew.-% der Gesamtmenge Epoxidharze in der Pulverlackzusammensetzung nicht überschreitet. Dies trifft speziell für die Epoxidverbindungen zu, die in der EP-A-0 506 617 und der EP-A-0 536 085, deren beider Beschreibung als Bestandteil dieser Beschreibung betrachtet wird, als Härter für Pulverlacke auf Basis saurer Polyester genannt sind und die aromatische Gruppen enthalten, insbesondere für die dort beschriebenen Polyglycidylester mit aromatischen Gruppen im Molekül, beispielsweise für Polyglycidylester aromatischer Polycarbonsäuren, wie für Diglycidylester von Phthal-, lsophthal- oder Terephthalsäure oder für Triglycidylester von Trimesin- oder Trimellitsäure.

Eine besonders vorteilhafte Ausführungsform der erfindungsgemässen Pulverlacke bilden jedoch die Zusammensetzungen, die als Epoxidharze ausschliesslich Glycidylester enthalten, die aus Polyglycidylestern cycloaliphatischer Polycarbonsäuren ausgewählt sind.

Bei Raumtemperatur (10 bis 25 °C) flüssige Epoxidharze werden bevorzugt in Form fester Mischphasen (fester Lösungen) eingesetzt, die aus den flüssigen und aus bei Raumtemperatur festen Epoxidharzen gebildet sind, wie dies in der EP-A-0 536 085 beschrieben ist.

Die erfindungsgemässen Pulverlackzusammensetzungen enthalten die Epoxidharze bevorzugt in einer Menge, dass das Verhältnis Carboxylgruppen der Poly(meth)acrylharze zu Epoxidgruppen zwischen 0,5 :1 und 2 : 1 liegt.

Die erfindungsgemässen Pulverlacke können ausserdem auch noch weitere in der Lackindustrie übliche Zusatzstoffe enthalten, wie beispielsweise Lichtschutzmittel, Härtungsbeschleuniger, Farbstoffe, Pigmente, z. B. Titandioxidpigment, Entgasungsmittel, z. B. Benzoin, und/oder Verlaufsmittel. Geeignete Verlaufsmittel sind z. B. Polyvinylacetale, wie Polyvinylbutyral, Polyethylenglycol, Polyvinylpyrrolidon, Glycerin, Acrylmischpolymerisate, wie sie z. B. unter den Bezeichnungen Modaflow® oder Acrylron® erhältlich sind. Weiterhin können die erfindungsgemässen Pulverlacke auch feste kolloidale Kondensationspolymere aus Harnstoff oder Melamin und Formaldehyd enthalten, wie in der EP-A-0 462 053 beschrieben ist, wenn zur Verfestigung flüssiger Epoxidharze nicht von der oben erwähnten Bildung fester Lösungen Gebrauch gemacht werden soll.

Erfindungsgemässe Pulverlacke können durch einfaches Mischen der Bestandteile, z. B. in einer Kugelmühle, hergestellt werden. Eine andere und mehr bevorzugte Möglichkeit besteht darin, dass man die Bestandteile zusammen aufschmilzt, vermischt und homogenisiert, vorzugsweise in einer Extrusionsmaschine, wie einem Buss-Kokneter, die Masse abkühlt und zerkleinert. Die Pulverlackmischungen weisen vorzugsweise eine Partikelgrösse im Bereich von 0,015 bis 500 µm, insbesondere von 10 bis 75 µm, auf. In manchen fällen kann es auch zweckmässig sein, zunächst ein Masterbatch aus Teilen des Bindemittels, der Epoxidharze und gegebenenfalls weiterer Komponenten herzustellen, das dann in einem zweiten Schritt mit dem Rest des Bindemittels und den restlichen Bestandteilen zu endgültigen Pulverlackzusammensetzung abgemischt und homogenisiert wird.

Die Pulverlacke werden nach ihrer Applikation auf den zu beschichtenden Gegenstand bei einer Temperatur von mindestens etwa 100 °C, vorzugsweise von 120 bis 140 °C, gehärtet. Für die Härtung sind im allgemeinen etwa 5 bis 60 Minuten erforderlich. Zur Beschichtung geeignet sind alle Materialien, die bei den zur Härtung erforderlichen Temperaturen stabil sind, insbesondere Keramik und Metalle. Das Substrat kann hierbei bereits eine oder mehrere Basislackbeschichtungen aufweisen, die mit dem Pulverlack verträglich sind.

Ein bevorzugtes Anwendungsgebiet für erfindungsgemässe Zusammensetzungen sind Automobildecklacke, die als oberste Schicht auf einer oder mehreren Basislackschichten aufgebracht werden, mit denen das Automobil zunächst versehen wird. Ein weiterer Gegenstand der Erfindung ist daher die Verwendung der oben beschriebenen Pulverlackzusammensetzungen als Automobildecklack.

### Beispiel:

Wie in der EP-A-0 697 440 unter Beispiel 1 beschrieben, wird ein Monomerengemisch der folgenden Zusammensetzung:
- Methacrylsäure (MAA) 15 g
- Styrol (St) 15 g
- Methylmethacrylat (MMA) 30 g
- Butylmethacrylat (BuMA) 40 g
- Dicumylperoxid (Initiator) 1,5 g
- Thioglycolsäure (Ketten- übertragungsmittel) 1,75 g
zu einer Vorlage aus:
- Toluol 30 Milliliter
- Dicumylperoxid 1,5 g
- Thioglycolsäure 1,75 g gegeben und Methacrylatharz A erhalten.

In einem Extruder (Laborextruder der Firma PRISM, The Old Stables, England) werden bei einer Temperatur zwischen 60 und 80°C die in der nachfolgenden Tabelle angegebenen Pulverlackzusammensetzungen (Mengen in Gramm) homogenisiert. Die abgekühlten Extrudate werden zum fertigen Pulverlack mit einer Partikelgrösse von etwa 40 µm vermahlen. Die Pulverlackzusammensetzungen werden auf ein mit einem Silbermetallicbasislack (VWL 97A BASF) vorbeschichtetem Aluminiumblech elektrostatisch aufgesprüht, wobei die Schichtstärke der Basislackbeschichtung 40µm beträgt und die des Pulverlacks in der Tabelle angegeben ist. Wichtige Eigenschaften der Lacke findet man ebenfalls in nachstehender Tabelle.

**Tabelle**

| Pulverlack Nr. | 1 | 2 | 3 |
|---|---|---|---|
| Methacrylatharz A | - | - | 74,81 |
| Joncryl SCX 819 (1) | 87 | 87 | - |
| TGIC (2) | 13 | | - |
| 1,2 CHDA DGE (3a) | | 13 | - |
| HHTMLA TGE (3b) | | | 20,79 |
| Benzoin | 0,3 | 0,3 | 0,29 |
| Modaflow M 2000 (4) | 0,3 | 0,3 | 0,29 |
| Tinuvin 144 (5) | 1,4 | 1,4 | 1,31 |
| Tinuvin 900 (6) | 2,6 | 2,6 | 2,51 |
| Extrusionsbedingungen | PRISM Extruder 250 rpm | | |
| | 60 - 80°C | | 70°C |
| Gel Zeit 140°C (s) | 250 | 570 | 248 |
| Einbrennbedingungen | 30 min/140°C | | |
| Schichtdicke Pulverlack | 60µm | 60µm | 45µm |
| Glanz (20°) | 80 | 80 | 47 |
| Glanz (60°) | 100 | 100 | 91 |
| Verlauf (visuell) (7) | 1 | 7 | 6 |
| Verlauf LW (8) | 61,5 | 42,3 | 35 |
| Verlauf SN (9) | 153,7 | 92 | 93 |
| Tg °C Pulver (10) | 37 | 32 | 32 |
| Tg °C Gehärtetes Syst. | 46 | 55 | 55 |

| | | | |
|---|---|---|---|
| (1): Carboxylfunktionelles Acrylarharz der Firma SC Johnson Wax; Säurezahl: 75 mg KOH/g Substanz; ICI-Schmelzviskosität: 6000 MPas bei 200°C; Molekulargewicht (Gewichtsmittel M_{w}): 17000 | | | |
| (2): Triglycidylisocyanurat | | | |
| (3a): Hexahydrophthalsäurediglycidylester (Araldit PY 284) | | | |
| (3b): Hexahydrotrimellitsäuretriglycidylester | | | |
| (4): Verlaufsmittel auf Basis eines butylierten Polyacrylats | | | |
| (5): HALS (Polyalkylpiperidinverbindung) | | | |
| (6): UV-Absorber | | | |
| (7): Empirische Skala von 0 (mangelhaft) bis 10 (sehr gut) Verlaufbestimmung mit Hilfe des "Wave Scan" - Profilometer (Fa. Byk) | | | |
| (8): Parameter "Long wave": von > 60 (Mangelhaft) bis < 30 (sehr gut) | | | |
| (9): Parameter "Subnote": von > 150 (mangelhaft) bis < 50 (sehr gut) | | | |
| (10): Tg-Werte dieser Tabelle wurden mit DSC (Heizgeschwindigkeit: 10°C/min) bestimmt. | | | |

Man kann der Tabelle insbesondere entnehmen, dass das Verlaufsverhalten der erfindungsgemässen Pulverlacke Nr. 2 und Nr. 3 wesentlich besser ist als das eines Pulverlacks mit dem gleichen Bindemittel aber dem herkömmlichen Pulverlackhärter Triglycidylisocyanurat (Pulverlack 1).

## Patentansprüche

1. Pulverlackzusammensetzung, die als Bindemittel ein oder mehrere Poly(meth)acrylharze mit freien Carboxylgruppen und als Härter für diese Poly(meth)acrylharze ein oder mehrere Epoxidharze mit einem Molekulargewicht bis zu 1500 enthält, **dadurch gekennzeichnet, dass** die Epoxidharze mindestens 70 Gew.-% Polyglycidylester cycloaliphatischer Polycarbonsäuren umfassen.

2. Pulverlackzusammensetzung gemäss Anspruch 1, **dadurch gekennzeichnet, dass** der Tg-Wert der Poly(meth)acrylharze mit freien Carboxylgruppen, bestimmt mit DSC (Aufheizgeschwindigkeit 10°C pro Minute) 40 bis 75°C beträgt.

3. Pulverlackzusammensetzung gemäss Anspruch 1 oder 2, **dadurch gekennzeichnet, dass** die Säurezahl der Poly(meth)acrylharze mit freien Carboxylgruppen 30 bis 160 beträgt.

4. Pulverlackzusammensetzung gemäss einem der Ansprüche 1 bis 3, **dadurch gekennzeichnet, dass** sie Hexahydrophthalsäure-, Hexahydroterephthalsäure-diglycidylester, 1,2,4-Cyclohexantricarbonsäuretriglycidlyester, 1,3,5-Cyclohexantricarbonsäuretriglycidlyester oder eine Polyglycidylverbindung der Formel (III) oder (IV) enthält, wobei in Formel (III) n eine ganze Zahl von 2 bis 9, X₁, X₂, X₃ sowie X₄ unabhängig voneinander ein Wasserstoffatom, eine C₁-C₄-Alkylgruppe oder eine Gruppe der Formel (II) bedeuten und A in Formel (II) für eine Alkylengruppe mit 2 bis 4 Kohlenstoffatomen steht und Y ein Wasserstoffatom oder eine Methylgruppe bedeutet und in Formel (IV) X₇ einen m-wertigen aliphatischen oder cycloaliphatischen Rest mit 2 bis 30 Kohlenstoffatomen, dessen Kohlenstoffkette gegebenenfalls durch eines oder mehrere Heteroatome, wie Stickstoff- oder Schwefel-, insbesondere aber Sauerstoffatome unterbrochen sein kann und der gegebenenfalls einen oder mehrere Hydroxyl-, Chlor- oder Bromsubstituenten aufweisen kann, m eine ganze Zahl von 2 bis 6 und die Reste X₈ sowie X₉ unabhängig voneinander ein Wasserstoff-, Chlor- oder Bromatom, eine C₁-C₄-Alkylgruppe bedeuten oder aber einer der Reste X₈ oder X₉ eine Gruppe der Formel (V) bedeutet und der andere ein Wasserstoff-, Chlor- oder Bromatom oder eine C₁-C₄-Alkylgruppe bedeutet:

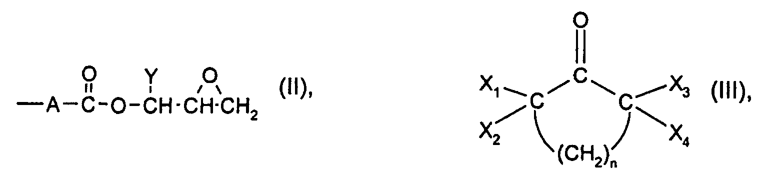

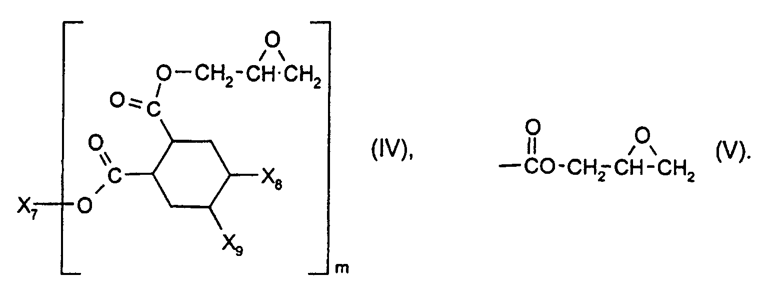

5. Pulverlackzusammensetzung nach einem der Ansprüche 1 bis 4, **dadurch gekennzeichnet, dass** sie als Epoxidharze ausschliesslich Polyglycidylester cycloaliphatischer Polycarbonsäuren enthält.

6. Verwendung von Pulverlackzusammensetzungen nach einem der Ansprüche 1 bis 5 als Automobildecklack.

## Claims

1. A powder coating composition, comprising as binder one or more than one poly(meth)-acrylic resin having free carboxyl groups and, as hardener for this poly(meth)acrylic resin, one or more than one epoxy resin having a molecular weight of up to 1500, the epoxy resins containing at least 70 % by weight of polyglycidyl esters of cycloaliphatic polycarboxylates.

2. A powder coating composition according to claim 1, wherein the Tg value of the poly(meth)acrylic resins having free carboxyl groups, determined by DSC (heating rate 10°C per minute), is 40 to 75°C.

3. A powder coating composition according to either claim 1 or claim 2, wherein the acid number of the poly(meth)acrylic resins having free carboxyl groups is 30 to 160.

4. A powder coating composition according to any one of claims 1 to 3, comprising diglycidyl hexahydrophthalate, diglycidyl hexahydroterephthalate, triglycidyl 1,2,4-cyclohexanetricarboxylate, triglycidyl 1,3,5-cyclohexanetricarboxylate or a polyglycidyl compound of formula (III) or (IV), n in formula (III) being an integer from 2 to 9, and X₁, X₂, X₃ and X₄ are each independently of one another a hydrogen atom, a C₁-C₄alkyl group or a group of formula (II), and A in formula (II) is an alkylene group containing 2 to 4 carbon atoms and Y is a hydrogen atom or a methyl group, and X₇ in formula (IV) is an aliphatic or cycloaliphatic radical of valency m containing 2 to 30 carbon atoms, the carbon chain of which may be interrupted by one or more than one hetero atom, typically a nitrogen atom or sulfur atom or, in particular, an oxygen atom, and can be unsubstitued or substituted by one or more than one hydroxyl, chloro or bromo substituent, m is an integer from 2 to 6, and X₈ and X₉ are each independently of the other a hydrogen, chloro or bromo atom, a C₁-C₄alkyl group, or one of X₈ and X₉ is a group of formula (V) and the other is a hydrogen, chloro or bromo atom or a C₁-C₄alkyl group:

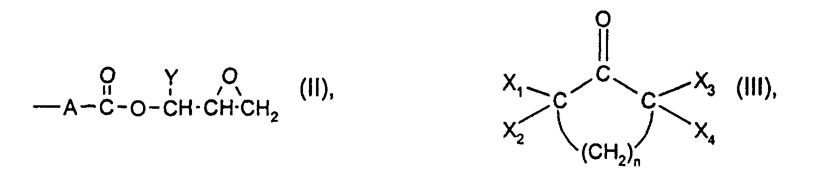

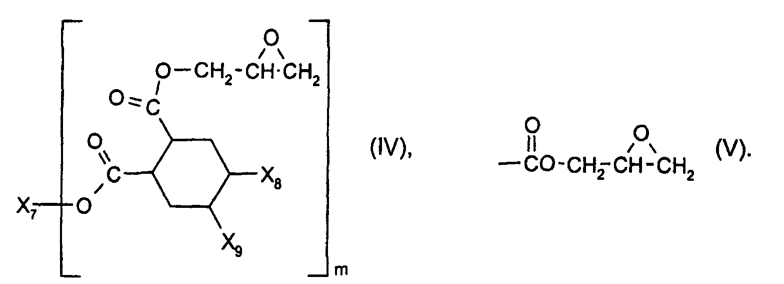

5. A powder coating composition according to any one of claims 1 to 6, comprising as epoxy resin exclusively polyglycidyl esters of cycloaliphatic polycarboxylates.

6. Use of a powder coating composition according to any one of claims 1 to 7 as automotive lacquer.

## Revendications

1. Composition de peinture en poudre qui, en tant que liant, contient une ou plusieurs résines poly((méth)-acryliques ayant des groupes carboxyle libres et, en tant que durcisseur pour ces résines poly((méth)acryliques une ou plusieurs résines époxydes ayant une masse moléculaire allant jusqu'à 1500, **caractérisée en ce que** les résines époxydes contiennent au moins 70 % en poids d'esters polyglycidyliques d'acides polycarboxyliques cycloaliphatiques.

2. Composition de peintures en poudre selon la revendication 1, **caractérisée en ce que** la Tg des résines poly((méth)acryliques comportant des groupes carboxyle libres, déterminée par ACD (vitesse de montée en température 10°C par minute), est de 40 à 75°C.

3. Composition de peintures en poudre selon la revendication 1 ou 2, **caractérisée en ce que** l'indice d'acide des résines poly((méth)acryliques comportant des groupes carboxyle libres est de 30 à 160.

4. Composition de peintures en poudre selon l'une des revendications 1 à 3, **caractérisée en ce qu'**elle contient l'ester diglycidylique de l'acide hexahydrophtalique, l'ester diglycidylique de l'hexahydrotéréphtalique, l'ester triglycidylique de l'acide 1,2,4-cyclohexanetricarboxylique, l'ester triglycidylique de l'acide 1,3,5-cyclohexanetricarboxylique ou un composé polyglycidylé de formule (III) ou (IV), où, dans la formule (III), n est un nombre entier de 2 à 9, X₁, X₂, X₃ et X₄ représentent chacun indépendamment des autres un atome d'hydrogène, un groupe alkyle en C₁-C₄ ou un groupe de formule (II), et A, dans la formule (II), représente un groupe alkylène ayant de 2 à 4 atomes de carbone et Y représente un atome d'hydrogène ou un groupe méthyle et, dans la formule (IV), X₇ est un résidu aliphatique ou cyclo-aliphatique m-valent ayant de 2 à 30 atomes de carbone, dont la chaîne carbonée peut être éventuellement inter-rompue par un ou plusieurs hétéroatomes, tels que des atomes d'azote ou de soufre, mais en particulier d'oxy-gène, et qui éventuellement peut comporter un ou plusieurs substituants hydroxyle, chloro ou bromo, m est un nombre entier de 2 à 6, et les radicaux X₈ et X₉ représentent chacun indépendamment de l'autre un atome d'hydrogène, de chlore ou de brome, un groupe alkyle en C₁-C₄, ou encore l'un des radicaux X₈ ou X₉ est un groupe de formule (V) et l'autre est un atome d'hydrogène, de chlore ou de brome, ou un groupe alkyle en C₁-C₄ :

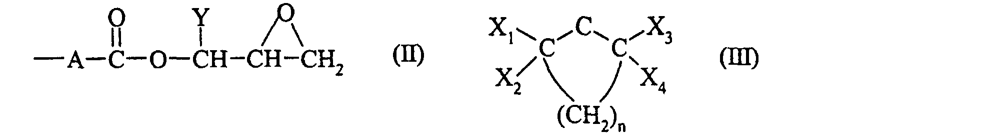

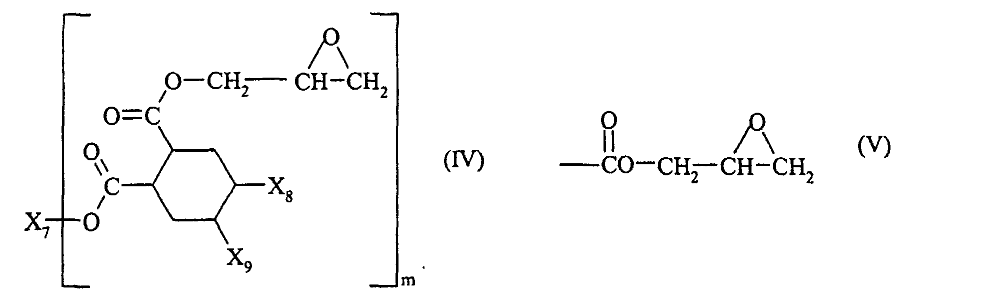

5. Composition de peintures en poudre selon l'une des revendications 1 à 4, **caractérisée en ce qu'**elle contient en tant que résines époxydes exclusivement des esters polyglycidyliques d'acides polycarboxyliques cycloaliphatiques.

6. Utilisation de compositions de peintures en poudre selon l'une des revendications 1 à 5 en tant que peintures de finition pour carrosserie automobile.
